# EUROPEAN PATENT APPLICATION

(11) **EP 1 971 127 A2**
(43) Date of publication of application: **17.09.2008**
(21) Application number: 08000882.4
(22) Date of filing: 17.01.2008
(51) Int. Cl.: H04N 1/60

(54) **Method for performing chromatic adaptation while displaying image, and corresponding display circuit and device**

(30) Priority: 15.01.2008 US 14111; 17.01.2007 US 885225 P
(71) Applicant: Mediatek Inc., Science-based Industrial Park Hsin-chu City, Taiwan 300 (CN)
(72) Inventor: Kuo, Chia-Hui, Jhubei City Hsinchu County Taiwan (CN)
(74) Representative: Weber, Joachim

(57) **Abstract**

A method for performing chromatic adaptation while displaying an image having a plurality of pixels within a display device includes: deriving chromaticity coordinate information of an external environment; and utilizing a chromatic adaptation model to perform calculations regarding each pixel according to the chromaticity coordinate information to adjust a plurality of pixel values outputted to a display module of the display device.

## Description

### Cross Reference To Related Applications

This application claims the benefit of US provisional application No. 60/885,225, which was filed on 1/17/2007 and is entitled "AMBIENT LIGHT SENSOR AND CHROMATIC ADAPTATION".

### Background

The present invention relates to automatic chromatic adaptation, and more particularly, to methods for performing chromatic adaptation while displaying an image, and corresponding display circuits and devices.

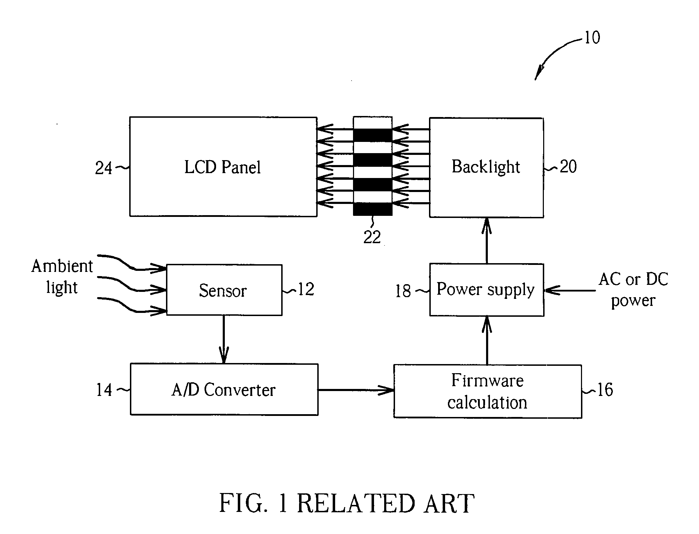

Please refer to FIG. 1. FIG. 1 is a diagram of a display device 10 according to the related art. The display device 10 comprises a sensor 12, an analog-to-digital converter (A/D converter) 14, a firmware calculation unit 16, a power supply 18, a backlight module 20, at least one optical filter 22 (e.g. a polarizer), and a liquid crystal display (LCD) panel 24. As shown in FIG. 1, the A/D converter 14 converts detection results of the sensor 12 into a digital format for the firmware calculation unit 16, so the display device 10 may adjust the power inputted into the backlight module 20 by utilizing the firmware calculation unit 16 according to the ambient light detected by the sensor 12. As a result, the luminance of light output from the backlight module 20 is adjusted in accordance with the ambient light.

The aforementioned adjustments performed by the display device 10 shown in FIG. 1 are typically inaccurate since electrical-to-optical characteristics of light sources such as cold cathode fluorescent lamp (CCFL) tubes (not shown) within the backlight module 20 vary by groups and further deviate within the same group. In addition, if the ambient light varies in color, the adjustments performed by the display device 10 shown in FIG. 1 are not able to cover a resultant color shift that may be perceptible to a user.

### Summary

It is an objective of the claimed invention to provide methods for performing chromatic adaptation while displaying an image, and provide corresponding display circuits and devices, in order to solve the above-mentioned problem.

It is another objective of the claimed invention to provide methods for performing chromatic adaptation while displaying an image, and provide corresponding display circuits and devices, in order to automatically perform chromatic adaptation by iterations.

An exemplary embodiment of a method for performing chromatic adaptation while displaying an image comprising a plurality of pixels within a display device comprises: deriving chromaticity coordinate information of an external environment; and utilizing a chromatic adaptation model to perform calculations regarding each pixel according to the chromaticity coordinate information to adjust a plurality of pixel values outputted to a display module of the display device.

An exemplary embodiment of a display circuit positioned within a display device for displaying an image comprising a plurality of pixels comprises: a sensor for deriving chromaticity coordinate information of an external environment; and a processing unit, coupled to the sensor, for utilizing a chromatic adaptation model to perform calculations regarding each pixel according to the chromaticity coordinate information to adjust a plurality of pixel values outputted to a display module of the display device.

An exemplary embodiment of a display device comprises: a display module for displaying an image comprising a plurality of pixels; and a display circuit coupled to the display module. The display circuit comprises: a sensor for deriving chromaticity coordinate information of an external environment; and a processing unit, coupled to the sensor, for utilizing a chromatic adaptation model to perform calculations regarding each pixel according to the chromaticity coordinate information to adjust a plurality of pixel values outputted to the display module.

These and other objectives of the present invention will no doubt become obvious to those of ordinary skill in the art after reading the following detailed description of the preferred embodiment that is illustrated in the various figures and drawings.

### Brief Description of the Drawings

- FIG. 1: is a diagram of a display device according to the related art.
- FIG. 2: is a diagram of a display device according to one embodiment of the present invention, where a processing unit within the display device executes firmware performing combined calculations for adaptation and R/G/B gamma correction.
- FIG. 3: is a diagram of a display device according to one embodiment of the present invention, where a processing unit within the display device executes firmware performing combined calculations for adaptation and Adaptive Luma.
- FIG. 4: illustrates a resultant color shift to be compensated by a method for performing chromatic adaptation while displaying an image according to one embodiment of the present invention.
- FIG. 5: is a diagram of a display device according to one embodiment of the present invention, where a processing unit within the display device executes firmware performing combined calculations for at least chromatic adaptation and color correction.
- FIG. 6: is a diagram of a display device according to one embodiment of the present invention, where a processing unit within the display device executes firmware performing combined calculations for at least chromatic adaptation and gain/offset correction.
- FIG. 7: is a diagram of a display device according to one embodiment of the present invention, where a processing unit within the display device executes firmware performing combined calculations for at least chromatic adaptation and color space transformation.
- FIG. 8: is a diagram of a display device according to one embodiment of the present invention, where a processing unit within the display device executes firmware performing combined calculations for at least chromatic adaptation and R/G/B gamma correction.

### Detailed Description

Certain terms are used throughout the description and following claims to refer to particular components. As one skilled in the art will appreciate, electronic equipment manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

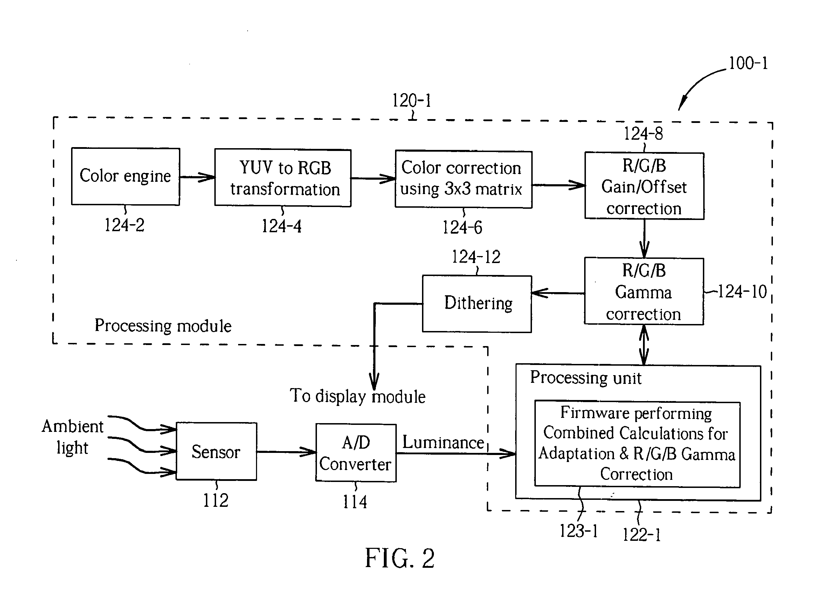

Please refer to FIG. 2. FIG. 2 is a diagram of a display device 100-1 according to a first embodiment of the present invention. The display device 100-1 comprises a sensor 112, an analog-to-digital converter (A/D converter) 114, a processing module 120-1, and a display module (not shown), where the processing module 120-1 comprises a color engine 124-2, a color space transformation stage such as a YUV to RGB transformation unit 124-4, a color correction stage such as a color correction unit 124-6 using a 3 by 3 matrix, a gain/offset correction stage such as an R/G/B gain/offset correction unit 124-8, a gamma correction stage such as an R/G/B gamma correction unit 124-10, and a dithering unit 124-12. According to different implementation choices of this embodiment, the display device 100-1 can be a liquid crystal display (LCD) TV or a LCD monitor.

The sensor 112 of this embodiment is utilized for deriving luminance information of an external environment where the display device 100-1 is located. According to this embodiment, the sensor 112 detects the ambient light to generate detection results of the ambient light, and the A/D converter 114 converts the detection results into a digital format of the luminance of the ambient light.

In this embodiment, the color space transformation stage (e.g. the YUV to RGB transformation unit 124-4) is utilized for performing a color space transformation operation, the color correction stage (e.g. the color correction unit 124-6) is utilized for performing a color correction operation, the gain/offset correction stage (e.g. the R/G/B gain/offset correction unit 124-8) is utilized for performing a gain/offset correction operation, and the gamma correction stage (e.g. the R/G/B gamma correction unit 124-10) is utilized for performing a gamma correction operation.

In addition, within the processing module 120-1, the processing unit 122-1 executing a firmware code may set or adjust data in at least one stage within the data path of the color engine 124-2 through to the display module, and/or directly change operations of at least one stage within the data path. In this embodiment, the processing unit 122-1 executes firmware 123-1 performing combined calculations for adaptation (e.g. luminance adaptation or chromatic adaptation) and R/G/B gamma correction in accordance with the ambient light. As a result, the display device 100-1 may adjust a plurality of pixel values that are eventually outputted to the display module in order to change output characteristics of the display device 100-1, so that tri-stimulus values of human eyes are adjusted.

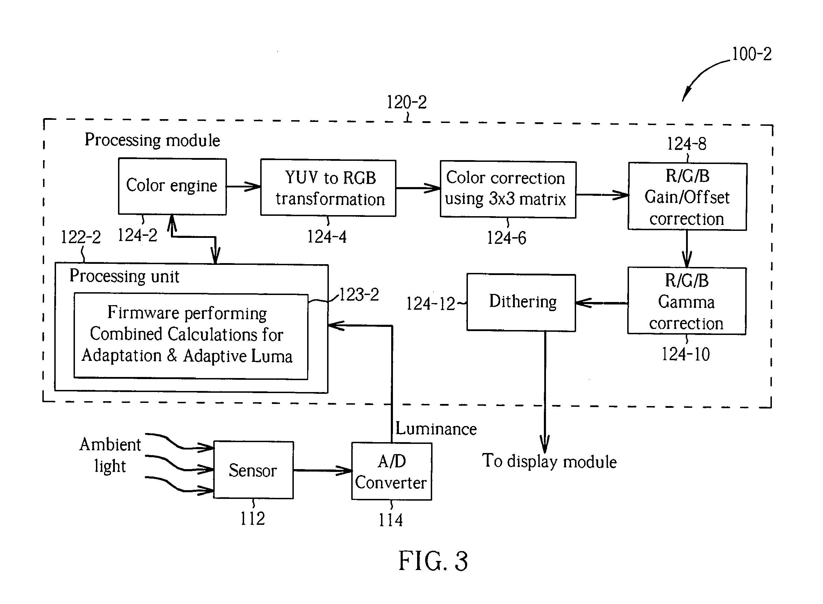

FIG. 3 is a diagram of a display device 100-2 according to one embodiment of the present invention, where this embodiment is a variation of the first embodiment. As shown in FIG. 3, the processing unit 122-2 of the processing module 120-2 within the display device 100-2 executes firmware 123-2 performing combined calculations for adaptation (e.g. luminance adaptation) and Adaptive Luma of the color engine 124-2 in accordance with the ambient light.

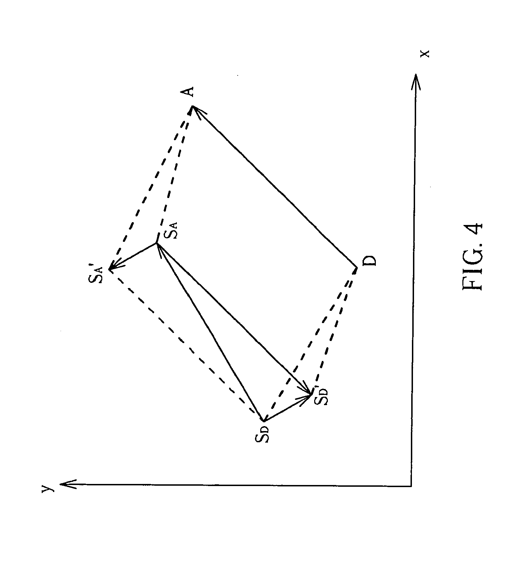

FIG. 4 illustrates a resultant color shift (S_{D}' - S_{D}) to be compensated by a method for performing chromatic adaptation while displaying an image according to one embodiment of the present invention, where D (such as D₆₅) and A respectively represent standard light sources, S_{D} represents original chromaticity coordinate values of a specific portion of the displayed image illuminated by the standard light source D, S_{A} represents intermediate chromaticity coordinate values of the specific portion of the displayed image illuminated by the standard light source A at the moment of the change of the light source, and S_{D}' represents resultant chromaticity coordinate values of the specific portion of the displayed image illuminated by the standard light source D in a steady state of color perception. According to the embodiment, a compensation vector (S_{A}' - S_{A}) may be gradually applied to the aforementioned combined calculations by iterations, so the method may perform chromatic adaptation dynamically and automatically. Please note that the method can be applied to the first embodiment or other embodiments in the following.

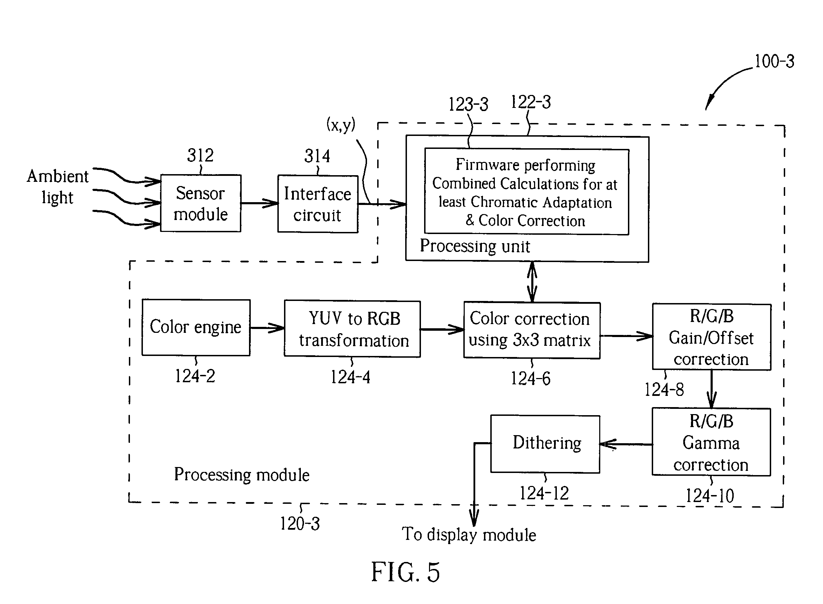

FIG. 5 is a diagram of a display device 100-3 according to a second embodiment of the present invention, where this embodiment is a variation of the first embodiment. As shown in FIG. 5, the processing unit 122-3 of the processing module 120-3 within the display device 100-3 executes firmware 123-3 performing combined calculations for at least chromatic adaptation (e.g. chromatic adaptation together with luminance adaptation) and color correction in accordance with the ambient light. The sensor module 312 of this embodiment comprises a plurality of sensors integrated into a single chip, and is utilized for deriving at least chromaticity coordinate information of an external environment where the display device 100-3 is located. The interface circuit 314 is utilized for coupling the sensor module 312 to the processing module 120-3.

According to this embodiment, the processing unit 122-3 utilizes a chromatic adaptation model to perform calculations regarding each pixel according to the chromaticity coordinate information to adjust a plurality of pixel values outputted to a display module (not shown) of the display device 100-3, where the chromatic adaptation model of this embodiment is derived from a von Kries hypothesis. The von Kries hypothesis is well known in the art and therefore not explained in detail.

More specifically, the processing unit 122-3 adjusts the plurality of pixel values to change output characteristics of the display device 100-3, so that tri-stimulus values of human eyes are adjusted. In this embodiment, the adjustments determined by the processing unit 122-3 are gradually performed by iterations. The processing unit 122-3 utilizes the chromatic adaptation model to calculate a plurality of adjustment amounts corresponding to the plurality of pixel values according to the chromaticity coordinate information.

According to one implementation choice of this embodiment, the processing unit 122-3 may adjust the plurality of pixel values by altering input values of the color correction unit 124-6. According to another implementation choice of this embodiment, the processing unit 122-3 may adjust the plurality of pixel values by altering matrix elements of the 3 by 3 matrix utilized by the color correction unit 124-6.

Please note that, as the chromatic adaptation model derived from the von Kries hypothesis can be represented by utilizing a chromatic adaptation matrix, and more particularly, by utilizing a 3 by 3 chromatic adaptation matrix C, the processing unit 122-3 executing a firmware code may apply this 3 by 3 chromatic adaptation matrix C to the data path of the color engine 124-2 through to the display module, by combining and simplifying at least a portion of corresponding matrixes of the stages within the data path through matrix multiplication. As a result, the display device 100-3 may adjust a plurality of pixel values that are eventually outputted to the display module in order to change output characteristics of the display device 100-1, so that tri-stimulus values of human eyes are adjusted.

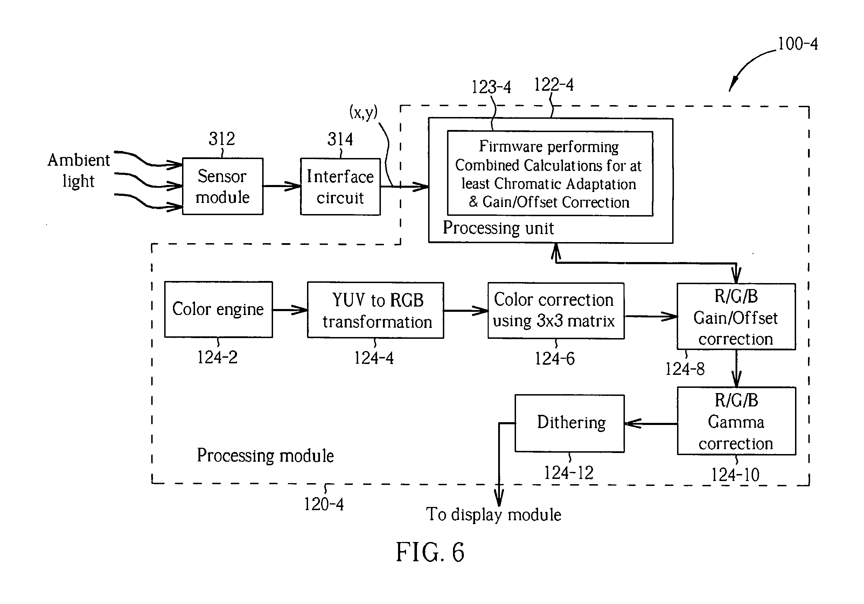

FIG. 6 is a diagram of a display device 100-4 according to one embodiment of the present invention, where this embodiment is a variation of the second embodiment. As shown in FIG. 6, the processing unit 122-4 of the processing module 120-4 within the display device 100-4 executes firmware 123-4 performing combined calculations for at least chromatic adaptation (e.g. chromatic adaptation together with luminance adaptation) and gain/offset correction in accordance with the ambient light.

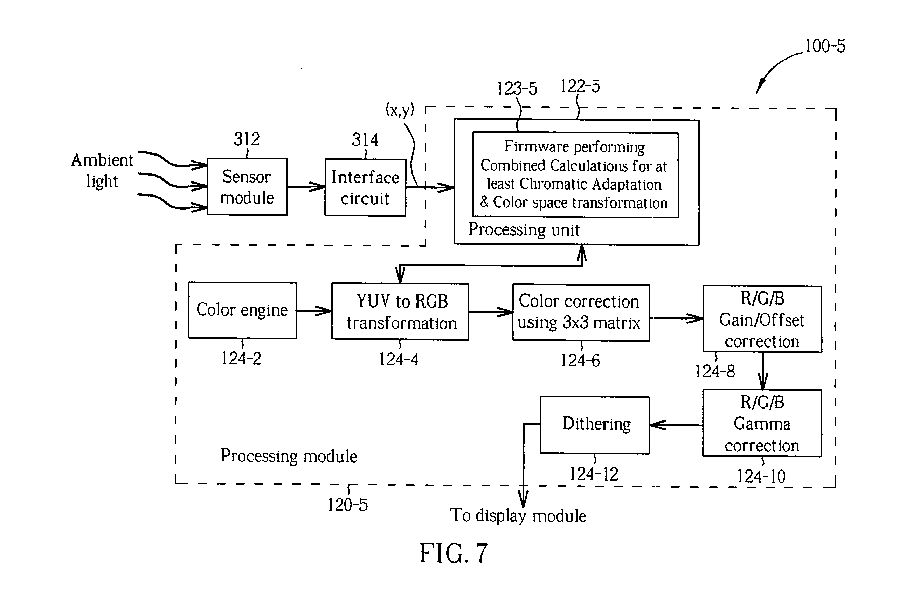

FIG. 7 is a diagram of a display device 100-5 according to one embodiment of the present invention, where this embodiment is also a variation of the second embodiment. As shown in FIG. 7, the processing unit 122-5 of the processing module 120-5 within the display device 100-5 executes firmware 123-5 performing combined calculations for at least chromatic adaptation (e.g. chromatic adaptation together with luminance adaptation) and color space transformation in accordance with the ambient light.

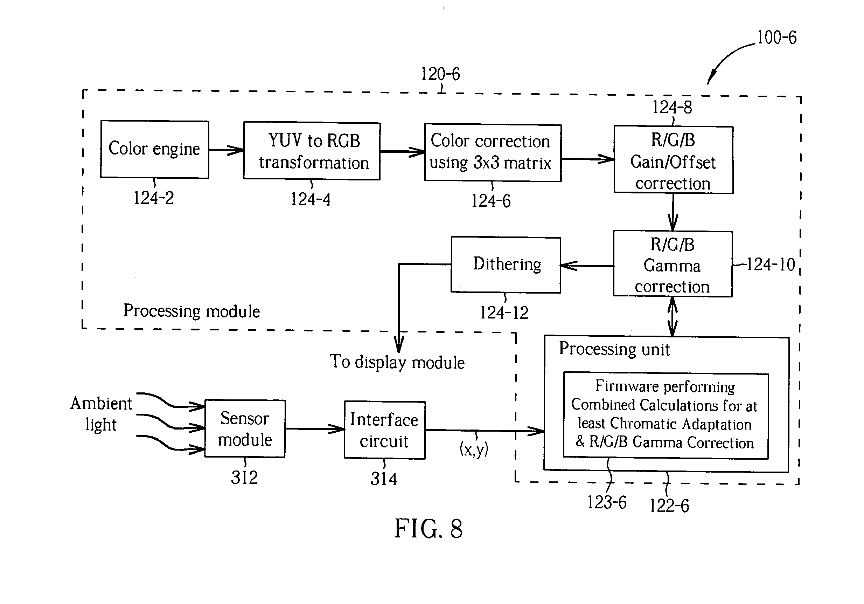

FIG. 8 is a diagram of a display device according to one embodiment of the present invention, where this embodiment is also a variation of the second embodiment. As shown in FIG. 8, the processing unit 122-6 of the processing module 120-6 within the display device 100-6 executes firmware 123-6 performing combined calculations for at least chromatic adaptation (e.g. chromatic adaptation together with luminance adaptation) and R/G/B gamma correction in accordance with the ambient light.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for performing chromatic adaptation while displaying an image comprising a plurality of pixels within a display device, comprising:
deriving chromaticity coordinate information of an external environment; and
utilizing a chromatic adaptation model to perform calculations regarding each pixel according to the chromaticity coordinate information to adjust a plurality of pixel values outputted to a display module of the display device.

2. The method of claim 1, wherein the chromatic adaptation model is derived from a von Kries hypothesis.

3. The method of claim 1, wherein the step of utilizing the chromatic adaptation model to perform calculations regarding each pixel to adjust the plurality of pixel values further comprises:
adjusting the plurality of pixel values to change output characteristics of the display device, so that tri-stimulus values of human eyes are adjusted.

4. The method of claim 1, wherein in the step of utilizing the chromatic adaptation model to perform calculations regarding each pixel to adjust the plurality of pixel values, the adjustments correspond to both luminance and chrominance.

5. The method of claim 1, wherein in the step of utilizing the chromatic adaptation model to perform calculations regarding each pixel to adjust the plurality of pixel values, the adjustments are gradually performed by iterations.

6. A display circuit positioned within a display device for displaying an image comprising a plurality of pixels, comprising:
a sensor for deriving chromaticity coordinate information of an external environment; and
a processing unit, coupled to the sensor, for utilizing a chromatic adaptation model to perform calculations regarding each pixel according to the chromaticity coordinate information to adjust a plurality of pixel values outputted to a display module of the display device.

7. The display circuit of claim 6, wherein the chromatic adaptation model is derived from a von Kries hypothesis.

8. The display circuit of claim 6, wherein the processing unit adjusts the plurality of pixel values to change output characteristics of the display device, so that tri-stimulus values of human eyes are adjusted.

9. The display circuit of claim 6, wherein the adjustments determined by the processing unit correspond to both luminance and chrominance.

10. The display circuit of claim 6, wherein the adjustments determined by the processing unit are gradually performed by iterations.

11. The display circuit of claim 6, wherein the processing unit utilizes the chromatic adaptation model to calculate a plurality of adjustment amounts corresponding to the plurality of pixel values according to the chromaticity coordinate information.

12. The display circuit of claim 6, further comprising:
a color space transformation stage, coupled to the processing unit, for performing a color space transformation operation;
wherein the calculations are combined with the color space transformation operation of the display device.

13. The display circuit of claim 6, further comprising:
a color correction stage, coupled to the processing unit, for performing a color correction operation;
wherein the calculations are combined with the color correction operation of the display device.

14. The display circuit of claim 6, further comprising:
a gain/offset correction stage, coupled to the processing unit, for performing a gain/offset correction operation;
wherein the calculations are combined with the gain/offset correction operation of the display device.

15. The display circuit of claim 6, further comprising:
a gamma correction stage, coupled to the processing unit, for performing a gamma correction operation;
wherein the calculations are combined with the gamma correction operation of the display device.

16. A display device, comprising:
a display module for displaying an image comprising a plurality of pixels; and
a display circuit, coupled to the display module, the display circuit comprising:
a sensor for deriving chromaticity coordinate information of an external environment; and
a processing unit, coupled to the sensor, for utilizing a chromatic adaptation model to perform calculations regarding each pixel according to the chromaticity coordinate information to adjust a plurality of pixel values outputted to the display module.

17. The display device of claim 16, wherein the chromatic adaptation model is derived from a von Kries hypothesis.

18. The display device of claim 16, wherein the processing unit adjusts the plurality of pixel values to change output characteristics of the display device, so that tri-stimulus values of human eyes are adjusted.

19. The display device of claim 16, wherein the adjustments determined by the processing unit correspond to both luminance and chrominance.

20. The display device of claim 16, wherein the adjustments determined by the processing unit are gradually performed by iterations.
